Europäisches Patentamt

European Patent Office

Office européen des brevets

(11) Publication number: **0 429 159 A2**

# EUROPEAN PATENT APPLICATION

(21) Application number: 90301915.6

(22) Date of filing: 22.02.90

(51) Int. Cl.⁵: **H01H 47/24**, H01H 9/56, H05B 1/02

(30) Priority: 17.11.89 US 438767

(43) Date of publication of application:
**29.05.91 Bulletin 91/22**

(84) Designated Contracting States:
**DE FR GB IT NL**

(71) Applicant: **Polster, Louis S.**
**1017 E. Fairmount Road**
**Burbank California 91501(US)**

(72) Inventor: **Polster, Louis S.**
**1017 E. Fairmount Road**
**Burbank California 91501(US)**

(74) Representative: **Abnett, Richard Charles et al**
**REDDIE & GROSE 16 Theobalds Road**
**London WC1X 8PL(GB)**

(54) **Relay with ARC sensor.**

(57) The relay has contacts (14,16) to control delivery of AC power to a load (20), and includes a sensor (46) mounted for detecting any arc at the relay contacts, and a control circuit (50) which controls the time of subsequent actuation or deactuation of the relay with respect to the AC power supply so that the relay contacts open or close substantially at a zero crossing point of the AC current, so as to minimise relay contact arcing, per EP-AZ-0 349 273.

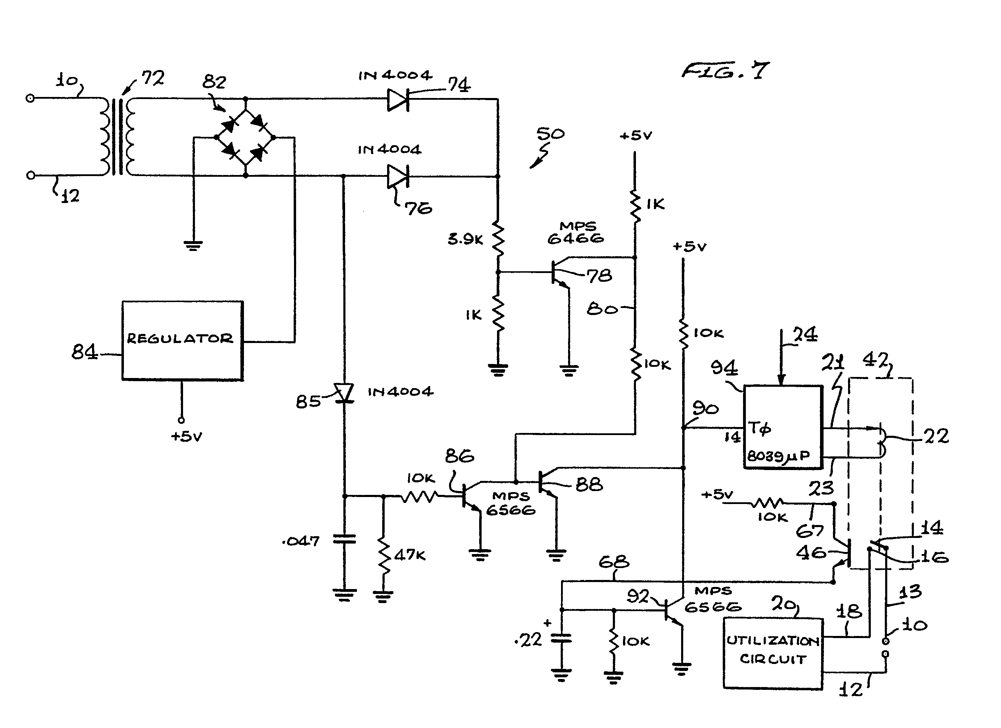

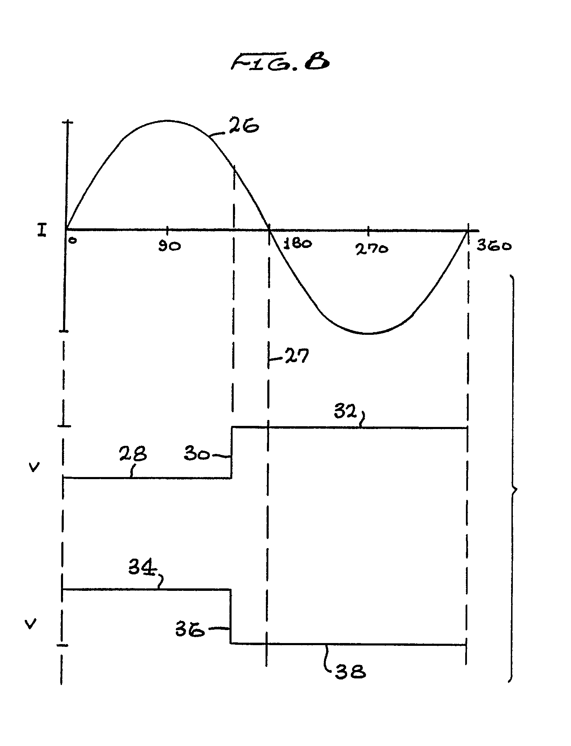

The sensor (46) is fixedly mounted by a bracket (48) on the relay base (43), so that its face is reliably fixed in position close to the contacts. The sensor may comprise an optical sensor (46), or the input end (54) of an optical fibre (58; Figure 3), or a field effect sensor (62; Figure 4), or may be in (96; Figure 6) or beneath (65; Figure 5) the relay base.

FIG.1

FIG.7

## RELAY WITH ARC SENSOR

This invention is directed to the control of a relay connected to a load by controlling the operating or dropout point of the relay so that it opens or closes at a zero current point in the AC load circuit to eliminate arcing at the relay contacts.

Current is delivered to an alternating current load through the contacts of a relay. When the load is to be switched off or on, the relay in actuated or deactuated. When the relay contacts open while current is flowing therethrough, an arc is drawn until the next zero current point, and this arc burns the relay contacts. Similar arcing occurs if contact closure is made at a non-zero current point in the AC cycle. It is this arc burning of the relay contacts which reduces relay life. Accordingly, to achieve greater relay life, it is desirable to reduce or eliminate arcing upon the opening or closing of the relay contacts.

According to the invention there is provided a relay comprising first and second relay contacts movable with respect to each other from a contacting position to a non-contacting position to control current flow between said first and second contacts, actuator means for connection to an actuation signal line, said actuator means being connected to said first and second contacts for moving said first and second contacts for moving said first and second contacts with respect to each other, sensor means positioned with respect to said contacts for sensing arcing at said first and second contacts upon opening and/or closing of said first and second contacts, said sensor means being for connection to a control circuit which is also for connection to said actuator means so that said control circuit controls the energization point of said actuator connection means so that the relay contacts open or close during a substantially zero current through said relay contacts, support means for supporting said contacts, said actuator means and said sensor means with respect to each other for forming a relay together with said sensor means.

Further aspects and features of the invention are to be found in the appended claims to which reference should now be made.

Attention is drawn to my European Patent Application No. 89 306522.7 publication No. 349 273, published on 3rd January 1990 (subsequent to the priority date of the present application). That application discloses by way of preferred example a relay mounted on a printed wiring board, with an optical sensor mounted on the other surface of the board such as to view arcing of the relay contacts through an aperture in the board and a window in the housing. A control circuit separate from the relay uses the output of the optical sensor to cause the relay contacts to open or close substantially at a zero crossing point of the AC current through them. The present application is differentiated from the disclosure of my earlier application in that the relay housing contains not only the contacts and the relay coil, but also carries the arcing sensor, thereby enabling the sensing face or portion of the sensor to be located close to the contacts in a secure and consistently-mounted manner in relation thereto, while not requiring a major increase in the size or complexity of the relay unit. The control circuit can be plugged in separately on the board.

A further example of a relay having an arcing sensor within the housing is to be found in my European Patent Application No. 903 filed herewith and claiming priority from United States Patent Application No. 438,739 of 17th November 1989.

### BRIEF DESCRIPTION OF THE DRAWINGS

The present invention will now be described in more detail by way of example, with reference to the drawings in which:

FIGURE 1 is an isometric view of a relay having therein an arc sensor in accordance with this invention, with parts of the relay broken away and shown in exploded position with respect to a printed wiring board which connects to the electric power source and load and which carries the relay control circuit.

FIGURE 2 is an enlarged detail of the relay contacts and showing a radiation sensor within the relay case positioned to receive arcing radiation from the relay contacts.

FIGURE 3 is similar to FIGURE 2, but showing a fiber optic radiation sensor.

FIGURE 4 is similar to FIGURE 2, but showing a non-visible radiation sensor.

FIGURE 5 is similar to FIGURE 2, but showing the radiation sensor attached to the outside of the relay housing.

FIGURE 6 is similar to FIGURE 2, but showing the radiation sensor mounted on the base of the relay and carrying its own connector pin.

FIGURE 7 is an electrical schematic block diagram showing an apparatus embodying this invention.

FIGURE 8 is a wave form diagram showing the current versus time and showing the relay command signal versus the same time base.

### DESCRIPTION OF THE PREFERRED EMBODIMENT

The system for which the apparatus and method are intended and for which they improve operating life comprises an AC power source represented by lines 10 and 12 in FIGURE 7. As seen in the lower right of that figure, line 10 is connected through line 13 to moving contact 14 which is connected to contact 16 upon closing of moving contact 14. The fixed contact 16 is connected by line 18 to a load 20. The load 20 may be any type of utilization circuit, including circuits having inductive and/or capacitive elements therein although, for convenience, the present relay will be described in connection with an inductive load. The utilization circuit 10 broadly represents any alternating current load. The utilization circuit is connected back to AC line 12 either directly, as indicated, or through additional contacts acting in series with the contacts 14 and 16.

As is conventional in relays, a solenoid coil 22 has its plunger mechanically connected to the moving contact 14 so that electrical actuation of the coil through its lines 21 and 23 causes actuation of the moving contact. For convenience of description of the conditions for operation of the present system, the relay illustrated in FIGURE 7 will be considered as "normally closed" in the sense that, when relay coil 22 is not energized, the contact 14 is closed as by a conventional spring (not shown). The relay can be constructed in the opposite manner so that, with deactuation of the coil, the contact will be opened by the spring and, in such a case, is a "normally open" contact. Command line 24 carries a signal to energize the solenoid and actuate the relay. In conventional systems, the command line 24 is directly connected to relay coil 22 so that, when a signal is present, the coil is energized and the contacts are opened.

FIGURE 8 represents by its curve 26 the current supplied through the load 20 by the AC lines. The current curve 26 is optimally a sine wave. It is shown in a single cycle in FIGURE 8, with a positive current flow from 10 to 180 degrees and a negative current flow from 0 to 360 degrees. A zero crossing of the current is achieved at 0, 180, and 360 degrees. The current curve is shown as an idealized sine wave in FIGURE 8 for convenience of illustration, but this invention is also useful with wave shapes other than ideal sine waves. The middle part of FIGURE 8 represents the voltage to relay coil 22 which, in this example, is of the "normally closed" type so that it requires actuation voltage to the relay to open the contacts. In its low state represented by line 28, the relay is closed. At the time represented by rising line 30, the voltage to relay coil 22 goes to the high state represented by line 32 and, after a very short period of time less than a half cycle, the relay contacts are opened.

The bottom waveform illustrates the voltage condition for drop-out operation of a "normally open" contacts relay, with the relay contacts closed at line 34, the voltage dropping at line 36, to the deactuated relay voltage at line 30, and the contacts opening at zero current time line 27. When the circuit of this invention is employed, the command signal may be away from the current zero at line 27, but the actuation signal is controlled so that the actual relay opening and closing represented by lines 30 and 36 in FIGURE 8 occurs on the zero crossing line 27 or very close thereto.

As is well known, when relay contacts are opened with current flowing therethrough, an arc is drawn, and this arc burns the relay contacts and reduces the life of the relay. In conventional circuits, there is no control over the actuation timing of the relay with respect to the current wave therethrough. Thus, the time 30 or 36 may occur at any point in the cycle between 0 and 360 degrees, and the chance that it will occur at one of the zero current crossings, such as indicated by line 27, is small. For this reason, the life of a conventional relay is greatly reduced.

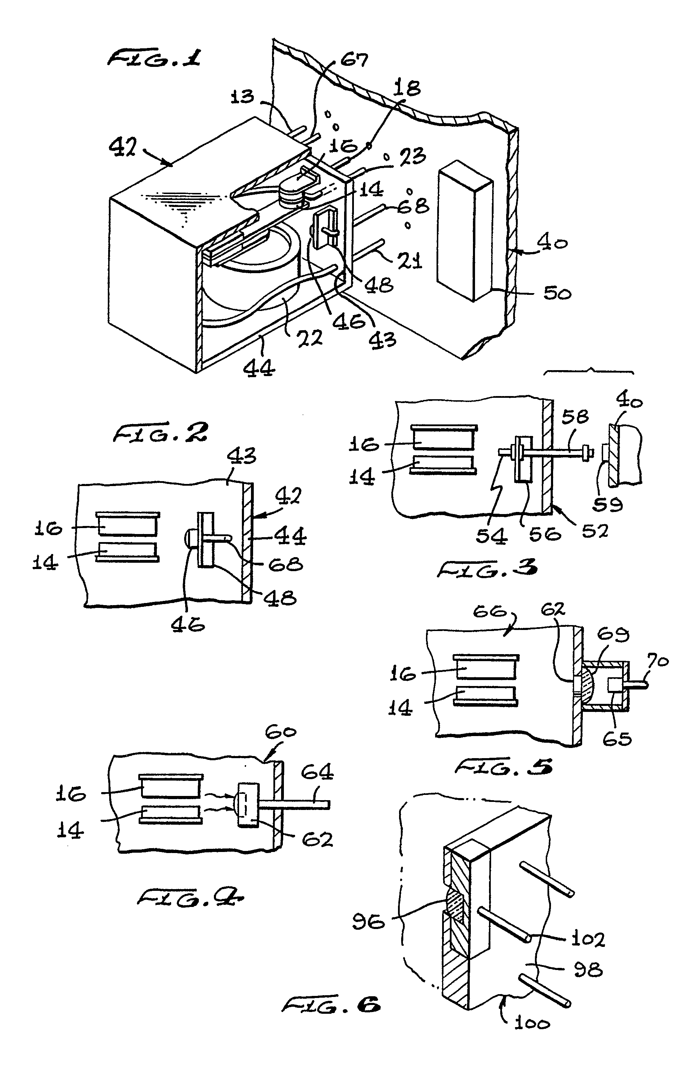

FIGURE 1 shows relay 42 positioned to plug into printed wiring board 40. The printed wiring board is a dielectric substrate carrying on one or both surfaces signal and load wiring for one or more of the relays plugged therein. Relay 42 is the same as the relays shown in FIGURES 2, 3, 4, 5 and 6 in a position where each is unplugged from the printed wiring board. Relay 42 is an example of a commercially available relay which can be employed in connection with the method and apparatus of this invention. The relay 42 contains the contacts 14 and 16 and actuating coil 22. Relay pins are connected to the coil 22 and insert into corresponding board pin sockets. One or more relays may be connected into the circuitry on the printed wiring board.

Each relay, as exemplified by relay 42 in FIGURES 1 and 7, has a base 43. Mounted on the base are the relay actuating coil 22 and the moving and fixed relay contacts 14 and 16. In addition, radiation sensor 46 is mounted on the base at a location where it can sense an arc and emit a signal when an arc is present upon opening or closing of the contacts 14 and 16. As seen in FIGURES 1 and 2, the radiation sensor 46 is mounted upon the base 43 on an angle bracket 48. Since all of the inner mechanism is mounted on the base of the relay, this base 43 maintains the positioning of the sensor 46 with respect to the contacts 14 and 16. Housing 44 attaches to base 43 to cover and protect the mechanism mounted on base 43.

Leads extend from the sensor 46. These are a power supply line 67 from the supply voltage and a connection to signal line 68, as seen in FIGURE 7. Relay 42 is a plug-in relay unit which has pins mounted on base 43. The pins plug into corresponding sockets in the printed wiring board to receive actuation signals from the control lines in the printed wiring board and to control the flow of power in the power lines in the printed wiring board. The plug-in pins of the relay extend from the base and are identified in FIGURE 1 by their line numbers.

FIGURES 2, 3, 4, 5 and 6 show different means by which a the radiation sensor is mounted in or on the relay and different sensing devices. The relay 52 in FIGURE 3 has the same contacts 14 and 16 and has the sensor 54 mounted upon bracket 56 on the base of the relay. Lead 58 carries out the signal. In this case, the sensor is the face of a fiber-optic cable 58 which is connected externally of the relay where the optical signal of the arc is converted suitably for use in the electronic circuitry of FIGURE 7. Lead 58 is suitably plugged in or terminated at the face of an optical-electronic transducer 59 on the printed wiring board so that the sensor is mounted in the relay housing and is removed and reinstalled when the plug-in relay is removed and reinstalled.

Relay 60, shown in FIGURE 4, has the same contacts 14 and 16. Relay 60 has within its housing sensor 62, which is connected by leads 64 to the circuitry of FIGURE 7. In this case, the sensor 62 is not an optical sensor, but is a field-effect sensor which emits a signal when the arcing contacts emit a field signal. Sensor 62 is mounted on the relay base.

Relay 66, shown in FIGURE 5, also has a base and a housing which contains the contacts 14 and 16. An opening 67 in the housing wall is in line with the contacts, and sensor 65 is mounted exteriorly on the housing and is positioned to receive arcing radiation through the opening 67. A lens 69 may be employed to focus the radiation on sensor 65. Leads 70 are connected to the circuitry of FIGURE 7 to indicate that an arcing signal has been received.

FIGURE 6 shows an arc sensor 96 inserted into the base 98 of relay 100. The arc sensor has a connection pin 102 which is parallel to the other connection pins, like the connection pin 68 shown in FIGURE 1 for connecting the sensor 46 in relay 42. The structure of FIGURE 6 thus illustrates the sensor and connection pin being retained in a separate body on the base of the relay, either inside the base or recessed in the base, as long as the sensor can sense radiation from arcing and as long as the connection pin is parallel to the other relay connection pins so that the relay can serve as a plug-in unit. Upon the insertion of this relay, as well as the other relays, the sensor is plugged into the control circuit mounted on, the printed wiring board or otherwise adjacent the relay.

The light-sensing device may be a light-sensing semiconductor, as shown in FIGURES 1, 2, 5, 6 and 7. It may be an optical fiber, as shown in FIGURE 3, which is ultimately converted to an electronic, signal for connecting into the circuitry. The sensor may detect other phenomena associated with the arcing, such as the field-effect device in FIGURE 4. In each case, the sensor is on the relay and the arcing signal is fed to the circuitry, which is separate from the relay. While a visible signal is described, arc radiation in other frequencies can be detected and employed as arc sensors.

It should be noted that, with a sensor (such as a light-sensing device 46 for example) at each relay, each relay can have its own control circuit and can be controlling loads having different characteristics, such as inductive or capacitive characteristics, and each relay is controlled for "no arc" at its load contacts.

Referring to FIGURE 7, it is seen that the AC lines 10 and 12 also feed signal transformer 72 which has its secondary connected through a pair of IN 4004 diodes 74 and 76. Both diodes are connected to the gate of MPS 6566 transistor 78. The collector line 80 of the transistor has a high pulse at each voltage zero crossing of the supply lines 10 and 12. Connected between the signal transformer at the lines is full-wave rectifier bridge 82 which supplies power to regulator 84, which supplies voltage to the control circuit.

The input to rectifier 76 is also connected to the input of IN 4004 diode 85, which has its output connected through a network to the base of MPS 6566 transistor 86. The collector of transistor 86 and the signal line 80 are both connected to the base of MPS 6566 transistor 88. The function of this circuit is to cancel alternate pulses in line 80 and invert. The output signal in line 90 is high with a low pulse at alternate voltage zero crossings.

The sensing device 46 shown in FIGURE 7 is a light-sensing LPT 80 photo-transistor. The control circuit may control only a single relay, as shown and, in such a case, only one photo-transistor is required. While it is most convenient to observe the arc by means of its visible light output, other types of sensors may be alternatively employed so long as they indicate the timing and duration of the arc. Line 68 is connected to the gate of MPS 6566 transistor 92, and the collector of this transistor is also connected to signal line 90. The result is that the signal in line 90 is held low for the duration of any arc observed by the sensor 64.

Line 90 is connected to terminal 14 of 8039 microprocessor 94. Microprocessor 94 is programmed as a logic device. Whenever it is instructed to open a relay contact by a command signal in command line 24, the logic device actuates relay opening at a subsequent zero crossing indicated at line 90. If an arc is observed by the sensor 46, the logic device measures the duration of the arc and places the duration information in memory for that relay. Each subsequent relay opening command causes the logic device to look to the memory and add the remembered time to the zero voltage crossing point signaled by line 90 before actuating the relay by an actuation signal in line 44. Thus, the relay 42 is caused to open its contact 14 at a zero current crossing 27, see FIGURE 8, so that there is no opening arc. This results in long relay life.

As a particular utilization circuit, a 16 ampere, 230 volt "Calrod" heater load is supplied through a suitable plug-in relay having incorporated therein the arc sensor of this invention, connected to an external control circuit. Without the apparatus and method of this invention, the normally expected relay life is about 200,000 cycles. Since the contact burning rate is extremely small when the apparatus and method of this invention are employed, relay life, under the same circumstances but with the inventive adjustment of the actuation point for no arcing, of about 5,000,000 cycles can be achieved without relay failure. The greater the current in the load circuit, the more arcing occurs with the consequence of more contact damage. The amount of arcing is a function of the load reactance. A purely resistive load would produce minimum relay contact damage, but even a "Calrod" heater load is sufficiently inductive to cause relay contact damage of the amount noted above. Thus, different relay life improvement can be seen with different loads.

In most relays, the pull-in or drop-out time changes slowly due to the amount of cycling required. Such is especially true in permanently connected equipment. For example in the present case, the utilization circuitry 20 is considered to be the heater in a deep-fat fryer, and the command signal in line 24 is a signal related to the deep-fat temperature so that the temperature of the deep fat can be carefully controlled. In other types of cooking or other utilizations, the command signal 24 may be a timing circuit which terminates power to the utilization circuit. It must be observed that the energization in actuator lines 21 and 23 does not occur at 0, 180, or 360 degrees on the current wave, but occurs sufficiently before so that the contacts actually open at the zero point. In such a case, the control circuit 50 would be one in which a command signal is received in command line 24 signaling the desire for relay opening, followed by an analysis of the voltage curve; and when the voltage curve reaches a predetermined point on its cycle, relay coil 22 is energized so that the moving contact opens when the current curve is at one of its zero points.

This invention has been described in its presently contemplated best modes, and it is clear that it is susceptible to numerous modifications, modes and embodiments within the ability of those skilled in the art and without the exercise of the inventive faculty. Accordingly, the scope of this invention is defined by the scope of the following claims.

## Claims

1. A relay comprising:
first and second relay contacts movable with respect to each other from a contacting position to a non-contacting position to control current flow between said first and second contacts;
actuator means connected to said first and second contacts for moving said first and second contacts with respect to each other;
sensor means positioned with respect to said contacts for sensing arcing at said first and second contacts upon opening and/or closing of said first and second contacts;
support means for supporting said contacts, said actuator means and said sensor means with respect to each other for forming a relay together with said sensor means; and a control circuit separate from said relay, said control circuit comprising:
command signal connection means forming part of said control circuit for receiving a signal signalling the actuation of a relay;
energization connection means forming part of said control circuit for connection to said actuator means of said relay for opening or closing the contacts of said relay; and
adjustment means forming part of said control circuit for controlling the energization point of said energization connection means so that the relay contacts open or close during a substantially zero current through said relay contacts.

2. The relay of Claim 1 further including means connected to said control circuit for sensing the zero voltage crossing points for timing reference for said energization point.

3. The relay of Claim 1 wherein said sensing means comprises a light-sensing device positioned on said relay support means to receive optical arc signals and connected to said control circuit to signal the presence of arcing upon opening or closing of the relay contacts.

4. The relay of Claim 1 wherein said sensing means comprises a field-effect sensing means.

5. The relay of Claim 3 wherein said relay has a housing and there is an opening in said housing in line with said contacts in said relay, said sensing means being secured on said housing covering said opening in said housing.

6. The relay of Claim 5 wherein there is a lens positioned between said contacts and said light-sensing device to collect optical emissions from relay contact arcing and direct them towards said light-sensing device.

7. The relay of Claim 1 further including a circuitboard and said circuitboard has sockets therein for the receipt thereon of a plug-in relay and said control circuit is mounted on said circuitboard.

8. The relay of Claim 7 wherein said relay is plugged into said circuitboard so that said control circuit is connected to said relay by plugging said relay into said circuitboard.

9. A relay comprising:

first and second relay contacts movable with respect to, each other from a contacting position to a non-contacting position to control current flow between said first and second contacts;

actuator means for connection to an actuation signal line, said actuator means being connected to said first and second contacts for moving said first and second contacts with respect to each other;

sensor means positioned with respect to said contacts for sensing arcing at said first and second contacts upon opening and/or closing of said first and second contacts, said sensor means being for connection to a control circuit which is also for connection to said actuator means so that said control circuit controls the energization point of said actuator connection means so that the relay contacts open or close during a substantially zero current through said relay contacts;

support means for supporting said contacts, said actuator means and said sensor means with respect to each other for forming a relay together with said sensor means.

10. The relay of Claim 9 wherein said sensing means comprises a light-sensing device positioned on said relay support means to receive optical arc signals and connected to said control circuit to signal the presence of arcing upon opening or closing of the relay contacts.

11. The relay of Claim 9 wherein said sensing means comprises a field-effect sensing means.

12. The relay of Claim 9 wherein said relay has a housing and there is an opening in said housing in line with said contacts in said relay, said sensing means being secured on said housing covering said opening in said housing.

13. The relay of Claim 12 wherein there is a lens positioned between said contacts and said light-sensing device to collect optical emissions from relay contact arcing and direct them towards said light-sensing device.

14. A relay control apparatus comprising:

a relay, said relay having a base, said relay having first and second contacts movable between a closed and an open position for the control of electric current therethrough;

operating means connected to said relay contacts for causing the opening and closing of said relay contacts in an AC line, said contacts and said operating means being mounted with respect to said base;

an arc sensor attached to said base and positioned with respect to said relay contacts to detect arcing emissions resulting from opening and closing of said relay contacts when current is passing therethrough;

a control circuit away from said relay, said arc sensor being connected to said control circuit to signal arcing to said control circuit;

a zero voltage sensing circuit connected to the AC line and connected to said control circuit to provide a time reference for the AC line to said control circuit; and

command signal means connected to said control circuit to signal the opening and closing of said relay contacts, said control circuit being connected so that when a relay opening command signal is received and said control circuit causes opening of said relay contact and an arc is detected, said control circuit is adjusted to cause relay operation to open said relay contacts at a different point on the AC current cycle on subsequent actuation so that, upon subsequent relay opening, said control circuit is adjusted so that said relay contacts open at a zero current point on the AC cycle and no arcing is detected.

15. The apparatus of Claim 14 wherein said sensor is mounted on a housing attached to said base.

16. The apparatus of Claim 15 wherein a utilization circuit is connected to said relay contacts, said utilization circuit being a cooking heater load and said command signal means connected to said control circuit being a cooking condition command signal.

17. The apparatus of Claim 16 wherein said cooking heater load is an electric cooking heater load and said cooking condition command signal circuit is a signal corresponding to adequate cooking temperature so that there is need to disconnect said cooking heater load from the AC power supply.

18. The apparatus of Claim 14 wherein said relay has a housing at least partially around said relay contact, said housing having an opening therein between said contacts and said sensor being mounted on the exterior of said housing over said opening so that arcing of said contacts can radiate to said sensor.

19. The apparatus of Claim 18 wherein there is energy collection means in said opening in said housing, said energy collection means being for collecting energy radiated by contact arcing and for directing a portion of the arcing energy to said sensor.

20. The apparatus of Claim 14 wherein there is a printed wiring board and said relay is plugged into said printed wiring board and said control circuit is mounted on said printed wiring board.

21. The apparatus of Claim 20 wherein a utilization circuit is connected to said relay contacts, said utilization circuit being a cooking heater load and said command signal means connected to said control circuit being a cooking condition command signal.

22. The apparatus of Claim 21 wherein said cooking circuit is an electric cooking heater load and said cooking command signal circuit is a signal corresponding to adequate cooking temperature so that there is need to disconnect said cooking heater load from the AC power supply.

23. The method of controlling a relay which has contacts for connection into an AC load line, which has an actuation device for controlling the contacts and a sensor on the relay for sensing arcing at the contacts, comprising the steps of:

detecting the alternating voltage state at the point along the AC cycle at which the relay contacts are opened;

observing radiation by the sensor on the relay at the opening of the contacts and when there is radiation;

adjusting a control circuit away from the relay the time of relay opening with respect to the AC wave to a different point on the AC wave so that the relay arcing radiation is minimized to enhance contact life.

24. The method of Claim 23 wherein the adjusting step is automatically achieved in the control circuit away from the relay which receives a signal from the sensor, an AC wave signal and a relay opening command signal.

25. The method of Claim 23 wherein the radiation observation is achieved by visual viewing on the relay and the adjustment of the relay actuation signal with respect to the AC signal off the relay is achieved manually.

26. The method of Claim 25 including the previous step of connecting the relay to energize a cooking heater load and connecting the relay command signal to a cooking signal source.

27. The method of Claim 23 wherein the relay arc radiation detector is an electronic detector on the relay and the signal therefrom is connected to a control circuit away from the relay to automatically adjust the relay operating point with respect to the AC current wave.

FIG.1

FIG.2

FIG.3

FIG.5

FIG.4

FIG.6

FIG. 7

FIG. 8